# EUROPÄISCHE PATENTSCHRIFT

(11) **EP 3 366 947 B1**
(45) Veröffentlichungstag und Bekanntmachung des Hinweises auf die Patenterteilung: **09.03.2022**
(21) Anmeldenummer: 18151945.5
(22) Anmeldetag: 16.01.2018
(51) Int. Cl.: F16G 13/06, F16G 15/14, F16G 13/08, B21L 11/00, B21D 28/06, F16G 13/02, B21L 9/04

(54) **VERFAHREN ZUM HERSTELLEN VON ABFALLARMEN KETTENLASCHEN**
METHOD FOR PRODUCING OF LOW-WASTE CHAIN PLATES
PROCÉDÉ DE FABRICATION D'ÉCLISSES DE CHAÎNE PEU POLLUANTES

(30) Priorität: 14.02.2017 DE 102017102931
(43) Veröffentlichungstag der Anmeldung: 29.08.2018
(73) Patentinhaber: iwis motorsysteme GmbH & Co. KG, 81369 München (DE)
(72) Erfinder: Urbanek, Andreas, 81377 München (DE)
(74) Vertreter: Grünecker Patent- und Rechtsanwälte PartG mbB

(56) Entgegenhaltungen:
- EP-A1- 0 040 120
- US-A- 4 328 665
- US-A- 4 411 131
- US-A1- 2013 225 345

## Beschreibung

Die vorliegende Erfindung betrifft ein Verfahren zum Herstellen von Kettenlaschen für eine Gelenkkette mit einander abwechselnden Innenkettengliedern und Außenkettengliedern, wobei die Kontur der Kettenlaschen mehrere Stanzabschnitte sowie zwei stirnseitige und rückenseitige Kontaktabschnitte aufweist, die nach dem Ausstanzen der Stanzabschnitte aus dem bereitgestellten Blechstreifen zunächst mit komplementären Kontaktabschnitten angrenzender Kettenlaschen verbunden sind und erst in einem nachfolgenden Trennabschnitt getrennt werden. Des Weiteren betrifft die Erfindung Hülsen- oder Rollenketten mit derartig hergestellten Außenkettenlaschen sowie einen entsprechenden Kettentrieb für einen Verbrennungsmotor mit einer solchen Hülsen- oder Rollenkette.

Kettenlaschen für herkömmliche Gelenkketten, die insbesondere als Antriebsketten in Verbrennungsmotoren eingesetzt werden, werden im Stand der Technik üblicherweise in einem zweiphasigen Stanzverfahren hergestellt. Dabei werden zunächst die Gelenköffnungen sowie besonders belastete Abschnitte der Kettenlaschenkontur, z.B. die Laschenrücken einfacher Kettenlaschen oder die Zahnflanken von Zahnlaschen, mit einer Reihe von unterschiedlichen Stanzstempeln aus einem Blechstreifen grob vorgestanzt und in einem zweiten Stanzschritt nachgeschnitten. Beim Nachschneiden wird die mit einem Aufmaß grob vorgeschnittene Kontur in einem Nachschneideschnitt auf ihr Endmaß gestanzt, wobei die geringe Spanbreite des Nachschnitts einen Glattschnittbereich ermöglicht, der sich weit über die Hälfte der Schnittfläche der ausgestanzten Kontur erstreckt. Durch das Nachschneiden der Gelenköffnungen und anderer verschleißrelevanter Konturen der Kettenlaschen, wird die Entstehung von mikroskopischen Rissen im Glattschnittbereich verhindert und der abrissfreie Glattschnittbereich der Schnittfläche signifikant erhöht, wodurch sich die Verschleißfestigkeit und Dauerbelastbarkeit der Kettenlaschen verbessert.

Ein derartiges Verfahren zum Vorstanzen und Nachschneiden von Kettenlaschen beschreibt die DE 10 2004 021 695 A1. Dabei werden zunächst nur die nachzuschneidenden Bereiche der Gelenköffnungen sowie die Kontur der Zahnlaschen aus einem Blechstreifen ausgestanzt, so dass die grob vorgestanzte Lasche in den gebogenen Stirnseitenbereichen weiterhin fest mit dem Blechstreifen verbunden ist. Danach werden zur Verbesserung der Positionierung des Blechstreifens und der Parallelität der nachgeschnittenen Oberflächen im zweiten Arbeitsschritt alle nachzuschneidenden Abschnitte der Kettenlaschenkontur durch Nachschneiden in umgekehrter Reihenfolge und Stanzrichtung auf ihr Endmaß gestanzt. In einem letzten Arbeitsschritt werden die Kettenlaschen an den gebogenen Stirnseitenbereichen durch ein Aus- oder Freistanzen endgültig aus dem Blechstreifen herausgetrennt.

Die insbesondere im Bereich der Automobiltechnik eingesetzten Hochleistungsketten sind bei hohen Laufgeschwindigkeiten großen Belastungen und dynamischen Lastwechseln sowie einer mitunter aggressiven Umgebung ausgesetzt. Entsprechend ist es bei derartigen Hochleistungsketten wichtig, dass die Funktionsflächen im Bereich der Zahnflanken, Laschen, Rückenflächen und Bolzenöffnungen eine niedrige Oberflächenrauigkeit aufweisen, die im Allgemeinen nur durch Nachschneiden oder Feinstanzen zu erzielen ist. Bei automobilen Antrieben laufen derartige Gelenkketten üblicherweise an Führungs- und/oder Spannschienen entlang, weshalb insbesondere die Laschenrücken der Kettenlaschen eine niedrige Oberflächenrauigkeit aufweisen müssen, um eine geeignete Lebensdauer nicht nur bei der Gelenkkette sondern auch bei den zugehörigen Schienen zu erreichen.

Neben einfachen unverzahnten Hülsen- oder Rollenketten werden in automobilen Antrieben auch Zahnketten eingesetzt, wobei die Zahnkontur der Zahnlaschen als Funktionsfläche ebenfalls einem Nachschneidevorgang oder einem Feinstanzen unterzogen ist. Neben der Zahnkontur ist bei derartigen Zahnlaschen üblicherweise auch der Laschenrücken feingestanzt oder nachgeschnitten, um eine gewünschte Oberflächenqualität zu erzielen. Eine solche nachgeschnittene Zahnlasche ist beispielsweise in der DE 20 2007 002 046 U1 beschrieben.

Die Herstellung von verzahnten oder unverzahnten Kettenlaschen für Hochleistungsketten erfolgt üblicherweise aus einem Stahlblech, das als Blechstreifen einer Stanzmaschine zugeführt wird. Die Kettenlaschen werden in mehreren Stanzschritten aus diesem Blechstreifen herausgestanzt, wobei die Längsachsen der Kettenlaschen üblicherweise parallel zur Längskante des Blechstreifens ausgerichtet sind und in aller Regel mehrere Stanzspuren vorgesehen sind. Ein übliches Stanzverfahren weist z.B. acht Stanzspuren übereinander auf. Beispielsweise wird bei einer geraden Kettenlasche für eine Kette mit einer Kettenteilung von 8 mm und einer Laschenlänge von 15,55 mm mit einer Vorschublänge von mindestens 17 mm gearbeitet, wobei der Abstand zwischen zwei hintereinander angeordneten Laschen bei einer solchen Ausführung 1,45 mm und der Abstand zweier Stanzspuren ca. 2,25 mm beträgt. Diese Abstände sind erforderlich, um ausreichend stabile Stanzstempel ausbilden zu können, die zwischen die Laschenrohlinge eingefahren und dort das Abfallmaterial wegstanzen. Zusätzlich muss auch ein bestimmter Randabstand zum Rand des Blechstreifens eingehalten werden, so dass trotz mehrerer Stanzspuren übereinander ein beträchtlicher Stanzabfall entsteht.

Aus der DE 10 2013 002 263 A1 ist ein Verfahren zum Herstellen von Hochleistungskettenlaschen bekannt, bei dem ein verringerter Stanzabfall anfällt. Bei diesem Verfahren ist die Vorschublänge reduziert und bevorzugt auf einen Wert knapp unterhalb der doppelten Teilung begrenzt. Dadurch sind die stirnseitigen Kopfbereiche nach dem Stanzen verbunden und werden durch einen nachfolgenden Trennschnitt getrennt, so dass der sonst beim Stanzen übliche Stanzsteg entfällt. Da in den stirnseitigen Bereichen der Kettenlasche die Oberflächenrauigkeit der Kontur eine untergeordnete Rolle spielt, können die durch das Trennen mittels eines Trennschnitts entstehenden Abrisskanten und vorstehende Grate akzeptiert werden. Das Gleiche gilt für die Spitzen der Zähne von Zahnlaschen, die unabhängig von der Bauart und Auslegung der Zahnkette nicht mit den Kettenrädern in Eingriff kommen. Demgegenüber sind sowohl die Bolzenöffnungen und Laschenrücken, aber auch die bauchseitigen Abschnitte gerader Kettenlaschen sowie die Außenflanken und Innenflanken von Zahnlaschen, durch entsprechende zweistufige Stanzverfahren mit einer hohen Oberflächenqualität ausgestaltet. Dabei dient die Verbindung der Zahnspitzen einander zugewandter Zahnkonturen für einen genaueren Nachschneidevorgang der Zahnflanken. Trotz der verringerten Vorschublänge kann die Anzahl der aus einem Blechstreifen herstellbaren Kettenlaschen mit diesem Verfahren nur geringfügig gesteigert werden.

Es ist daher die Aufgabe der vorliegenden Erfindung, ein Verfahren zum Herstellen von Kettenlaschen bereitzustellen, dass neben einer deutlichen Reduzierung des Stanzabfalls auch die Anzahl der aus einem Blechstreifen ausstanzbaren Kettenlaschen erhöht.

Diese Aufgabe wird erfindungsgemäß dadurch gelöst, dass das Verfahren zum Herstellen von Kettenlaschen für eine Gelenkkette mit einander abwechselnden Innenkettengliedern und Außenkettengliedern die Schritte: Bereitstellen eines Blechstreifens, Ausstanzen der Stanzabschnitte der Kettenlaschen aus dem Blechstreifen, wobei neben den stirnseitigen Kontaktabschnitten an den Kopfbereichen der Kettenlaschen während des Ausstanzens jeweils ein weiterer rückenseitiger Kontaktabschnitt mit einem komplementären Kontaktabschnitt angrenzender Kettenlaschen verbunden ist, und Trennen der stirnseitigen Kontaktabschnitte und der rückenseitigen Kontaktabschnitte der Kopfbereiche der Kettenlaschen mittels eines im Wesentlichen abfalllosen Trennschnitts, umfasst. Bei den am Rand des Blechstreifens angeordneten Kettenlaschen sind die stirnseitigen und rückenseitigen Kontaktabschnitte entsprechend mit einem komplementären Kontaktabschnitt des Randbereichs verbunden, so dass auch hier das Ausstanzen der Stanzabschnitte und der nachfolgende Trennschnitt komplementär zu den innenliegenden Kettenlaschen erfolgen kann. Die zusätzlichen rückenseitigen Kontaktabschnitte ermöglichen ein genaueres Ausstanzen der Stanzabschnitte bei einer erhöhten Geschwindigkeit des Ausstanzens. Außerdem reduziert sich durch die rückenseitigen Kontaktabschnitte der Abstand der Stanzspuren zueinander, was zu einer Reduzierung des Stanzabfalls führt.

Um die Herstellung der Kettenlaschen zu vereinfachen und den Abstand zweier Stanzspuren zu minimieren, kann während und nach dem Ausstanzen der Stanzabschnitte an den Kopfbereichen der Kettenlaschen jeweils ein weiterer bauchseitiger Kontaktabschnitt mit einem komplementären Kontaktabschnitt angrenzender Kettenlaschen verbunden sein, die in dem nachfolgenden Trennabschnitt zusammen mit den stirnseitigen Kontaktabschnitten und den rückenseitigen Kontaktabschnitten getrennt werden. Zweckmäßigerweise können nach dem Ausstanzen der Stanzabschnitte die rückenseitigen Kontaktabschnitte mit den bauchseitigen Kontaktabschnitten angrenzender Kettenlaschen verbunden sein. Dadurch weisen alle aus einem Blechstreifen hergestellten Kettenlaschen die gleiche Walzrichtung und entsprechend damit verbundene Materialeigenschaften auf.

Bevorzugt kann das Ausstanzen der Stanzabschnitte der Kettenlaschen durch Vorstanzen und anschließendem Nachschneiden der Stanzabschnitte erfolgen. Das Nachschneiden vorgestanzter Stanzabschnitte ermöglicht eine im Wesentlichen glatte Oberfläche im Schnittbereich der Laschenkontur mit einem breiten Glattschnittbereich ohne signifikante Risse oder Rissflächen. Im Gegensatz zu einem direkten Feinstanzen von Kettenlaschen ermöglicht das Vorstanzen und anschließende Nachschneiden ein vergleichsweise schnelles Ausstanzen der Stanzabschnitte bei einem vergleichbaren Glattschnittbereich.

Eine günstige Ausführungsform sieht vor, dass die Stanzabschnitte der Kettenlaschen angrenzend an die stirnseitigen, rückseitigen und/oder bauchseitigen Kontaktabschnitte einen zumindest konkaven Übergangsbereich aufweisen. Der konkave Übergangsbereich an die später durch den abfalllosen Trennschnitt erzeugten stirnseitigen, rückenseitigen und/oder bauchseitigen Kontaktabschnitte dient dazu, die Kerbwirkung des Übergangs zu minimieren bzw. zu vermeiden, die durch das abfalllose Trennen und der in aller Regel schlechteren Qualität der Schnittfläche der Kontaktabschnitte entstehen kann. Der im Wesentlichen konkave Verlauf des Übergangsbereichs zu den Stanzabschnitten verhindert oder reduziert einen negativen Einfluss der Kontaktabschnitte auf die Festigkeit und Dauerhaltbarkeit der Kettenlaschen, da der konkave Verlauf einen spannungsarmen Übergang zwischen den Kontaktabschnitten und dem restlichen ausgestanzten Konturverlauf der Kettenlaschen ausbildet.

In einer sinnvollen Ausbildung betrifft die Erfindung ein Verfahren zum Herstellen von gewichts- und abfalloptimierten Außenlaschen für eine Gelenkkette unter Berücksichtigung der vorbeschriebenen Varianten. Dabei umfasst jedes Außenkettenglied mindestens zwei Außenlaschen und jedes Innenkettenglied mindestens eine Innenlasche, wobei die Kontur der Außenlaschen mehrere Stanzabschnitte und zwei stirnseitige Kontaktabschnitte aufweist, die nach dem Austanzen der Stanzabschnitte zunächst mit den stirnseitigen Kontaktabschnitten angrenzender Außenlaschen verbunden sind und in einem nachfolgenden Trennschnitt getrennt werden. Diese erfindungsgemäße Ausgestaltung des Verfahrens ist gekennzeichnet durch folgende Schritte, Bereitstellen eines Blechstreifens, Ausstanzen der Stanzabschnitte mehrerer Außenlaschen aus dem Blechstreifen, wobei neben den stirnseitigen Kontaktabschnitten an den Kopfbereichen der Außenlaschen jeweils ein weiterer rückenseitiger Kontaktabschnitt mit einem komplementären Kontaktabschnitt angrenzender Außenlaschen verbunden ist, und Trennen der stirnseitigen Kontaktabschnitte und der rückenseitigen Kontaktabschnitte der Kopfbereiche der Außenlaschen mittels eines im Wesentlichen abfalllosen Trennschnitts. Bei herkömmlichen Außenlaschen für Gelenkketten, insbesondere für Gelencketten, die als Hochleistungsketten in Verbrennungsmotoren eingesetzt und extremen statischen und dynamischen Belastungen sowie einer aggressiven Umgebung ausgesetzt sind, wird zwischen den Laschenrücken der Außenlaschen und angrenzenden Bereichen des Blechstreifens ausreichend Material benötigt, um sauber stanzen zu können und eine ausreichende Qualität der Schnittfläche sicherzustellen. Das erfindungsgemäße Verfahren ermöglicht, die Außenlaschen nicht nur in Längsrichtung der Laschen, sondern auch in deren Querrichtung eng aneinander auf dem Blechstreifen zu positionieren, sodass der Stanzabfall gegenüber herkömmlichen Laschen deutlich reduziert werden kann.

Zwischen den beiden rückseitigen Kontaktabschnitten an den Kopfbereichen der erfindungsgemäß hergestellten Außenlaschen gibt es ein in Richtung der Laschenlängsachse zurückversetzten Stanzabschnitt, durch den die Länge der rückenseitigen Kontaktabschnitte kurz gehalten wird, sodass ein im Wesentlichen abfallloser Trennschnitt überhaupt durchgeführt werden kann, ohne die Außenlasche zu verbiegen oder zu verziehen. Bevorzugt sind dabei die rückenseitigen Kontaktabschnitte derart angeordnet, dass die Außenlasche zur Querachse eine symmetrische Kontur aufweist. Für eine möglichst hohe Einsparung an Stanzabfall und einer möglichst effektiven Ausnutzung des Blechstreifens können die rückenseitigen Kontaktabschnitte mit entsprechenden bauchseitigen Kontaktabschnitten angrenzender Außenlaschen, bzw. mit entsprechenden Konturen am Rand des Blechstreifens, verbunden sein. Dies ermöglicht eine Einsparung von bis zu 30 % des Blechstreifens gegenüber herkömmlichen Außenlaschen oder einer entsprechend erhöhten Ausbringung von Außenlaschen aus einem Blechstreifen. Darüber hinaus ergibt sich dann auch in Richtung der Längsachse der Außenlaschen eine symmetrische Geometrie.

Eine zweckmäßige Ausgestaltung sieht vor, dass die stirnseitigen und/oder die rückenseitigen Kontaktabschnitte der Kopfbereiche der Außenlasche gegenüber der Kontur der mindestens einen Innenlasche in Richtung der Bolzenöffnungen, bzw. Laschenlängsachse zurückversetzt sind. Auch entsprechend optional vorgesehene bauchseitige Kontaktabschnitte sind gegenüber der Kontur der mindestens einen Innenlasche in Richtung der Bolzenöffnung zurückversetzt. Im Gegensatz zu herkömmlichen Außenlaschen weisen die nach dem erfindungsgemäßen Verfahren hergestellten Außenlaschen nicht nur keinen geraden und durchgängigen Laschenrücken auf, sondern der Laschenrücken ist entsprechend den hier vorgesehenen Kopfbereichen und dem dazwischen angeordneten Stanzabschnitt in drei Abschnitte unterteilt, die gegenüber der Kontur der Innenlaschen zurückversetzt sind, um keine verschleißerhöhende Wirkung durch die raue Schnittfläche und möglicherweise überstehende Grate an den rückenseitigen Kontaktabschnitten zu bewirken. Entsprechend wird auch ein möglicher Verschleiß der Gelenkkette und insbesondere der mit der Gelenkkette in Kontakt stehenden Bauteile des Antriebs verhindert. Da die Kontur der mindestens einen Innenlasche gegenüber den Kontaktabschnitten und insbesondere gegenüber den rückenseitigen Kontaktabschnitten, vorsteht, entsteht auch bei einer in einem Verbrennungsmotor vorgespannten Gelenkkette nur ein Kontakt zwischen den Innenlaschen und den zugeordneten Spann- und Führungsschienen. Damit kann sowohl ein erhöhter Verschleiß als auch ein vorzeitiger Ausfall des zugehörigen Kettentriebs vermieden werden. Für eine effektive Nutzung der hergestellten Außenlaschen, insbesondere auch für Hochleistungskettenantriebe in Verbrennungsmotoren, kann die Gelenkkette eine als Hülsen- oder Rollenkette ausgebildete Antriebskette sein.

Die vorliegende Erfindung betrifft weiter eine Hülsen- oder Rollenkette mit einander abwechselnden Innenkettengliedern und Außenkettengliedern, die jeweils mittels eines Kettengelenks miteinander verbunden sind, wobei jedes Außenkettenglied mindestens zwei Außenlaschen mit jeweils zwei stirnseitigen Kopfbereichen und zwei in den Kopfbereichen angeordneten Bolzenlöchern sowie zwei sich durch die Bolzenlöcher erstreckende die Außenlaschen miteinander verbindende Kettenbolzen umfasst, jedes Innenkettenglied mindestens eine Innenlasche und zwei im Abstand zueinander angeordnete Bolzenöffnungen umfasst, und wobei sich jeweils ein Kettenbolzen eines Außenkettenglieds zum Bilden des Kettengelenks durch eine Bolzenöffnung eines angrenzenden Innenkettengliedes erstreckt. Dabei weist die Kontur der Außenlaschen mehrere, mittels Ausstanzen hergestellte, Stanzabschnitte sowie an den zwei stirnseitigen Kopfbereichen jeweils mindestens einen stirnseitigen und einen rückenseitigen Kontaktabschnitt auf, die mittels eines dem Ausstanzen der Stanzabschnitte nachfolgenden Trennschnitt hergestellt sind, wobei die stirnseitigen und/oder rückseitigen Kontaktabschnitte gegenüber der Kontur der Innenlaschen in Richtung der Bolzenöffnungen zurückversetzt sind. Eine solche Hülsen- oder Rollenkette kann mit einem geringeren Materialeinsatz hergestellt werden und ermöglicht trotz der einfacheren und kostengünstigeren Herstellung ein annähernd gleiches Verschleiß- und Alterungsverhalten. Auch mögliche Bauteile eines zugehörigen Antriebs unterliegen durch die unveränderte Kontur der Laschenrücken der Innenlaschen keiner zusätzlichen Belastung, da die Laschenrücken der Innenlaschen im Hinblick auf die zurückversetzte Kontur der Außenlasche tragend an entsprechenden Komponenten anliegen.

Eine besondere Ausbildung sieht vor, dass die Kontur der Außenlaschen an den zwei stirnseitigen Kopfbereichen weiter jeweils mindestens einen bauchseitigen Kontaktabschnitt aufweist, die mittels eines dem Ausstanzen der Stanzabschnitte nachfolgenden Trennschnitt hergestellt und gegenüber der Kontur der Innenlaschen in Richtung der Bolzenöffnungen zurückversetzt sind. Diese optionalen bauchseitigen Kontaktabschnitte reduzieren den beim Herstellen der Außenlaschen anfallenden Stanzabfall nochmals, wodurch die Ausbringung von Außenlaschen aus einem gegebenen Blechstreifen erhöht wird. Die Länge der rückenseitigen Kontaktabschnitte, aber auch der optional vorgesehenen bauchseitigen Kontaktabschnitte, kann minimiert werden, wenn gemäß einer Ausführung die Kontur der Außenlaschen zwischen den zwei stirnseitigen Kontaktbereichen tailliert ausgebildet und gegenüber der Kontur der Innenlaschen zurückversetzt ist.

Darüber hinaus bezieht sich die Erfindung auf einen Kettentrieb für einen Verbrennungsmotor, insbesondere einen Steuerkettentrieb, mit einem antreibenden Kettenrad, mindestens einem abtreibenden Kettenrad und einer der vorbeschriebenen Hülsen- oder Rollenkette. Mit einem solchen Kettentrieb lassen sich Kosten für den Verbrennungsmotor einsparen, da eine derartige Hülsen- oder Rollenkette im Vergleich zu herkömmlichen Ketten wesentlich günstiger herzustellen ist. In dem beschleunigten Herstellverfahren der Kettenlaschen einer solchen Hochleistungskette muss darüber hinaus weit weniger Material verwendet werden. Da die Anforderung an Hülsen- oder Rollenketten für Verbrennungsmotoren in den letzten Jahren bzw. Jahrzehnten ständig gestiegen sind, werden auch immer hochwertigere Materialien und Wärmebehandlungsverfahren eingesetzt. Eine Materialeinsparung beim Herstellvorgang ist daher von großem Vorteil und führt zu einer signifikanten Kostenreduktion.

Im Folgenden wird die Erfindung anhand von Zeichnungen näher erläutert. Es zeigen:
- Fig. 1: eine Schnittdarstellung einer Ausführungsform einer erfindungsgemäßen Hülsen- oder Rollenkette,
- Fig. 2: die Hülsen- oder Rollenkette aus Fig. 1 in einer Seitenansicht,
- Fig. 3: eine vergrößerte Seitenansicht auf eine Außenlasche der Hülsen- oder Rollenkette aus Fig. 1,
- Fig. 4: eine Seitenansicht der Außenlasche aus Fig. 3 über einer Innenlasche der Hülsen- oder Rollenkette aus Fig. 1,
- Fig. 5: eine verkleinerte Darstellung eines Blechstreifens mit neun Stanzreihen der Außenlasche aus Fig. 3 bzw. sieben Stanzreihen herkömmlicher Kettenlaschen, und
- Fig. 6: eine schematische Darstellung eines Kettentriebs.

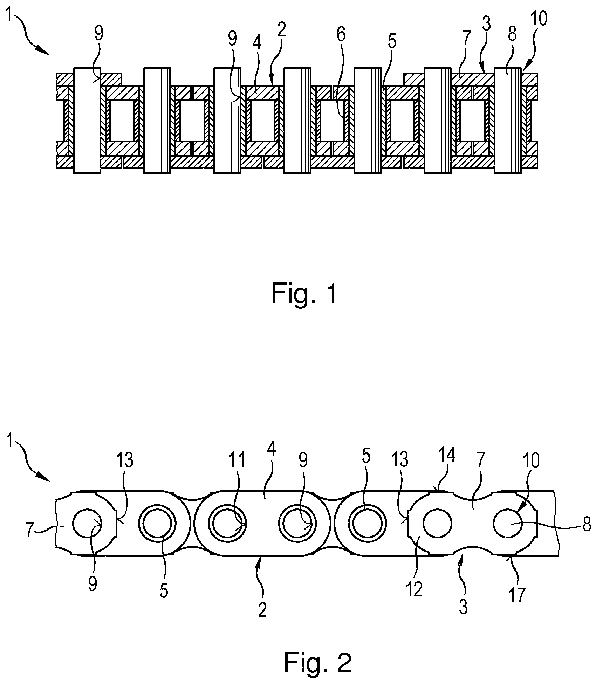

Anhand der Fig. 1 bis Fig. 4 wird im Folgenden eine Ausführungsform einer erfindungsgemäßen Hülsen- oder Rollenkette näher erläutert.

Die in den Fig. 1 und Fig. 2 dargestellte Antriebskette 1 ist als Rollenkette ausgeführt, wobei an den zwei inneren Außenkettengliedern 3 aus Übersichtlichkeitsgründen einseitig jeweils eine Außenlasche 7 weggelassen wurde. Die Antriebskette 1 weist sich abwechselnde Innenkettenglieder 2 und Außenkettenglieder 3 auf, die jeweils über ein Kettengelenk 10 miteinander verbunden sind. Jedes Innenkettenglied 2 umfasst zwei im Abstand zueinander angeordnete Innenlaschen 4 und zwei diese Innenlaschen miteinander verbindende Gelenkhülsen 5 und zwei drehbar gelagerte Rollen 6, die jeweils auf einer Gelenkhülse 5 angeordnet sind. Die Gelenkhülsen 5 sind in entsprechenden Hülsenöffnungen 11 der Innenlaschen 4 eingepresst und stehen seitlich etwas über. In einer Ausführungsform der Antriebskette 1 als Hülsenkette ist der Aufbau mit sich einander abwechselnden Innenkettengliedern 2 und Außenkettengliedern 3 identisch, jedoch sind auf den Gelenkhülsen 5 der Innenkettenglieder 2 keine Rollen 6 vorgesehen.

Die Außenkettenglieder 3 umfassen zwei im Abstand zueinander angeordnete Außenlaschen 7 und zwei diese miteinander verbindende im parallelen Abstand zueinander angeordnete Kettenbolzen 8. Die Kettenbolzen 8 sind in entsprechende Bolzenöffnungen 9 der Außenlaschen 7 eingepresst und stehen seitlich etwas über. Ein Kettenbolzen 8 erstreckt sich jeweils durch eine Gelenkhülse 5. Der Kettenbolzen 8 des Außenkettenglieds 3 bildet zusammen mit der zugehörigen Gelenkhülse 5 des Innenkettenglieds 2 ein Kettengelenk 10 aus. Dabei halten die gegenüber den Innenlaschen 4 leicht überstehenden Gelenkhülsen 5 der Innenkettenglieder 2 die Außenlaschen 7 in einem geringen Abstand zu den Innenlaschen 4, so dass bei einer Bewegung der Antriebskette 1 um das Kettengelenk 10 nur zwischen der Stirnseite der Gelenkhülsen 5 und den Außenlaschen 7 ein Reibungswiderstand entsteht.

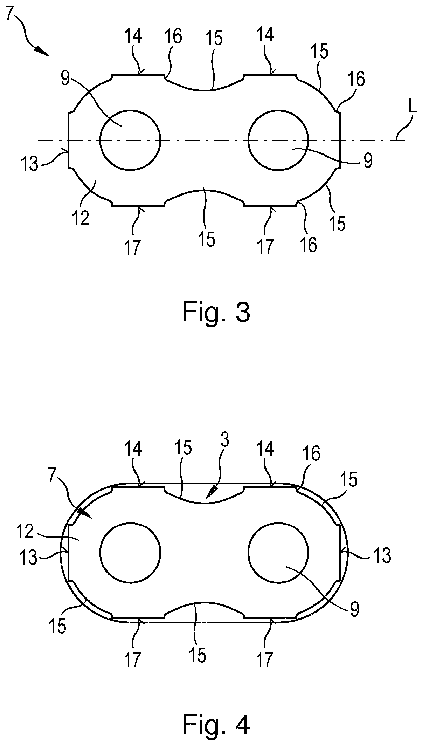

Fig. 3 zeigt eine vergrößerte Seitenansicht einer Außenlasche 7 der Antriebskette 1 aus den Fig. 1 und 2. Die Außenlasche 7 ist tailliert ausgebildet und bildet an den Stirnseiten zwei Kopfbereiche 12 aus, in deren Mitte die Bolzenöffnungen 9 angeordnet sind. Die beiden Kopfbereiche weisen an den stirnseitigen Enden jeweils einen stirnseitigen Kontaktabschnitt 13 auf, mit dem die Außenlasche 7 während der Herstellung nach dem Verfahrensschritt des Ausstanzens der Stanzabschnitte mit angrenzenden Außenlaschen verbunden ist. Entlang des Laschenrückens der Außenlasche 7 sind die Kopfbereiche 12 weiter mit jeweils einem rückseitigen Kontaktabschnitt 14 versehen, wobei zwischen den beiden rückenseitigen Kontaktabschnitten 14 ein feingestanzter oder nachgeschnittener Stanzabschnitt 15 positioniert ist. Der Stanzabschnitt 15 ist gegenüber den beiden rückenseitigen Kontaktabschnitten 14 in Richtung der Laschenlängsachse L zurückversetzt. Dabei ist an den Enden des Stanzabschnitts 15 angrenzend an den rückenseitigen Kontaktabschnitt 14 ein konkaver Übergangsbereich 16 vorgesehen. Der konkave Übergangsbereich 16 verbessert nicht nur den Kraftverlauf innerhalb der Außenlaschen 7 und erhöht damit die Festigkeit der Außenlachen 7, sondern ist bevorzugt auch mit einer guten Oberflächenrauigkeit versehen, um im Übergang zwischen dem Stanzabschnitt 15 und dem rückenseitigen Kontaktabschnitt 14 die auftretenden Kerbwirkungen zu minimieren.

Die Außenlasche 7 in Fig. 3 weist auch auf der dem Laschenrücken abgewandten Bauchseite der Außenlasche 7 zwei den jeweiligen Kopfbereichen 12 zugeordneten bauchseitigen Kontaktabschnitte 17 auf, die ebenfalls von einem in Richtung der Laschenlängsachse L zurückversetzten Stanzabschnitt 15 beabstandet sind. Die zwischen den rückenseitigen Kontaktabschnitten 13 und den bauchseitigen Kontaktabschnitten 17 vorgesehenen Stanzabschnitte 15 bilden entsprechend eine in Richtung der Laschenlängsachse L taillierte Kontur der Außenlasche 7 aus. Neben diesen mittig angeordneten Stanzabschnitten 15 sind auch an den Kopfbereichen 12 jeweils zwei Stanzabschnitte 15 vorgesehen, die die rückenseitigen Kontaktabschnitte 14 bzw. die bauchseitigen Kontaktabschnitte 17 jeweils von den stirnseitigen Kontaktabschnitten 13 trennen. Auch diesen Stanzabschnitten 15 ist an den Enden jeweils ein konkaver Übergangsbereich 16 zur Verbesserung des Kraftverlaufs in der Außenlasche 7 und zur Minimierung der Kerbwirkung vorgesehen.

Die vergrößerte Seitenansicht der Außenlasche 7 in Fig. 4 zeigt die Kontur der Außenlasche 7 gegenüber der Kontur der in der Antriebskette 1 eingesetzten Innenlaschen 4. In dieser Darstellung ist deutlich zu erkennen, dass die Kontur der Außenlasche 7 nicht nur in dem Bereich der Stanzabschnitte 15, sondern gerade auch im Bereich der stirnseitigen Kontaktabschnitte 13, der rückenseitigen Kontaktabschnitte 14 und der bauchseitigen Kontaktabschnitte 17, gegenüber der Kontur der Innenlasche 4 zurückversetzt ist. Entsprechend entfalten die rauen Schnittflächen und überstehenden Grate, insbesondere an den rückenseitigen Kontaktabschnitten 14, beim Einsatz der Antriebskette 1 in einen Kettentrieb 21 keinen zusätzlichen Verschleiß an zugehörigen Spann- oder Führungsschienen 24, 26, da die Antriebskette 1 beim Entlanggleiten an den Spann- oder Führungsschienen 24, 26 von der Kontur der Innenlaschen 4 getragen wird. Gerade die bei einem Trennschnitt möglicherweise entstehenden Grate könnten sonst zu einer schnellen Beschädigung des Gleitbelags der Spann- oder Führungsschienen 24, 26 führen, was einen vorzeitigen Ausfall des Kettentriebs 21 zur Folge hätte.

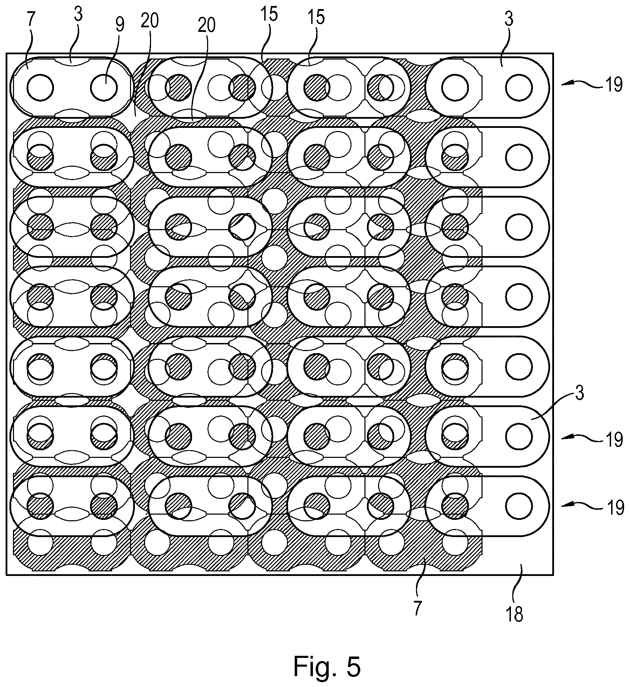

Fig. 5 zeigt eine etwas verkleinerte Darstellung eines Blechstreifens 18 mit neuen Stanzreihen der Außenlaschen 7 aus Fig. 3 bzw. sieben Stanzreihen herkömmlicher Kettenlaschen, beispielsweise von Außenlaschen 7 mit der Kontur der Innenlaschen 4. Die Herstellung der Außenlaschen 7 erfolgt aus einem Stahlblech in Laschendickenstärke. Dieses Stahlblech wird als Blechstreifen 18 der Stanzvorrichtung zugeführt, wobei der Blechstreifen 18 von einer Rolle mit einem getakteten schrittweisen Vorschub durch die Stanzmaschine bewegt oder als Blechstreifen 18 in Form von Blechtafeln der Stanzmaschine zugeführt werden kann. In Fig. 5 sind neun parallel nebeneinander angeordnete Stanzreihen 19 mit jeweils vier taillierten Außenlaschen 7 dargestellt. Alternativ können aus diesen Blechstreifen 18 auch sieben parallel nebeneinander angeordnete Stanzreihen 19 mit herkömmlichen Kettenlaschen, entsprechend der Kontur der Innenlaschen 4, hergestellt werden. Beim ausreichenden Stanzabstand zwischen den Stirnseiten dieser herkömmlichen Kettenlaschen ergibt sich neben der geringeren Anzahl an Stanzreihen 19 auch eine größere notwendige Blechlänge für die jeweils dargestellten vier herkömmlichen Kettenlaschen je Stanzreihe 19. Bei der Herstellung der Außenlaschen 7 werden aus dem Blechstreifen 18 zunächst die den Stanzabschnitten 15 der jeweiligen Außenlaschen 7 zugeordneten Stanzausschnitte 20 und die Bolzenöffnungen 9 vorgestanzt, wodurch die Außenlachen 7 bereits im Wesentlichen ihre Grundform erhalten. Dabei werden die stirnseitigen Kontaktabschnitte 13, rückenseitigen Kontaktabschnitte 14 und bauchseitigen Kontaktabschnitte 17 nicht voneinander bzw. nicht vom Rand des Blechstreifens 18 getrennt. Damit weist der Blechstreifen 18 ein Feld von 36 nicht voneinander getrennten Laschenrohlingen auf. Das Vorstanzen der Stanzausschnitte 20 erfolgt mit einem geringen Glattschnittanteil und grober Oberflächengüte. Das gilt zum einen für die durch das Vorstanzen freigelegten Stanzabschnitte 15 als auch für die vorgestanzten Bolzenöffnungen 9.

In einem nachfolgenden Verfahrensabschnitt erfolgt ein Nachschneiden sowohl der Bolzenöffnungen 9 als auch der Stanzabschnitte 15 der Außenlaschen 7. Da beim Nachschneiden ein relativ geringer Materialabtrag erfolgt, entsteht eine Oberfläche mit einem relativ hohen Glattschnittanteil und einer geringen Oberflächenrauigkeit. Hierbei werden auch die mit einem Radius versehenen konkaven Übergangsbereiche 16 an den Enden der Stanzabschnitte 15 erzeugt. In einem weiteren Verfahrensschritt werden die an den stirnseitigen Kontaktabschnitten 13 bzw. an den rückenseitigen Kontakt und bauchseitigen Kontaktabschnitten 14, 17 miteinander verbundenen Laschenrohlinge mittels eines im Wesentlichen abfalllosen Trennschnitts voneinander getrennt. Der Trennschnitt erfolgt mittig zwischen zwei benachbarten Bolzenöffnungen angrenzender Laschenrohlinge, so dass eine senkrecht zur Laschenlängsachse L verlaufende Schnittfläche entsteht. Ein weiterer Trennschnitt erfolgt auch zwischen den einzelnen Stanzreihen 19, wobei die rückenseitigen Kontaktabschnitte 14 von den angrenzenden Kontaktabschnitten, hier den bauchseitigen Kontaktabschnitten 17 oder den Kontaktabschnitten des Rahmens des Blechstreifens 18, getrennt werden. Die abfalllosen Trennschnitte erfolgen mit einer Oberflächengüte, die deutlich geringer ist als die Oberflächengüte der nachgeschnittenen Stanzabschnitte 15, wobei der Glattschnittanteil üblicherweise bei nur 20 bis 30 % liegt und insgesamt ein gröberes Bruchbild sowie Grate an der Schnittfläche entstehen.

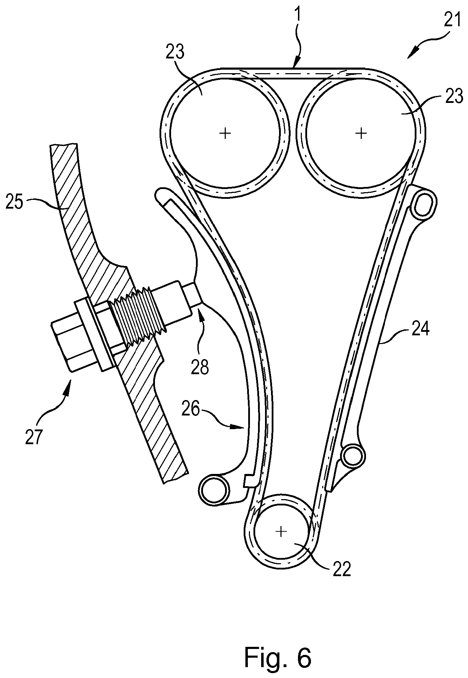

Die entsprechend dem anhand Fig. 5 dargestellten Stanzverfahren hergestellten Außenlaschen 7 werden in der in Fig. 1 und 2 dargestellten Antriebskette 1 verwendet, die wiederum in einem in Fig. 6 beispielhaft dargestellten Kettentrieb 21 genutzt werden kann. Bei dem in Fig. 6 dargestellten Kettentrieb 21 handelt es sich um einen Steuerkettentrieb eines Verbrennungsmotors, der das Kurbelwellenkettenrad 22 mit den beiden Nockenwellenkettenrädern 23 verbindet. Hierzu wird die als Rollen- oder Hülsenkette ausgebildete Antriebskette 1 um die Kettenräder 22,23 herum geführt. Dabei liegt der Zugtrum des Kettentriebs 21 an einer Führungsschiene 24 an, während der Lostrum mit einer schwenkbar am Motorblock 25 angeordneten Spannschiene 26 geführt wird, die mittels eines Kettenspanners 27 an die Antriebskette 1 angedrückt wird. Der Kettenspanner 27 ist hier als Einschraubspanner in einen Abschnitt des Motorblocks 25 eingeschraubt und drückt mittels eines Spannkolbens 28 auf einen rückseitigen Bereich der Spannschiene 26. Dabei muss die Antriebskette 1 so ausgestaltet sein, dass sie verschleißarm entlang der Gleitflächen der Führungsschiene 24 und der Spannschiene 26 entlang gleiten kann. Dazu steht die Kontur der Innenlaschen 4 gegenüber den rückenseitigen Kontaktabschnitten 14 der Außenlaschen 7 über, so dass beim Entlanggleiten der Antriebskette 1 an den Gleitflächen jeweils nur die Laschenrücken der Innenlaschen 4 tragen und die entsprechend hohe Oberflächengüte der Laschenrücken der Innenlaschen 4 keinen zusätzlichen Verschleiß an den Gleitflächen der Führungsschiene 24 und der Spannschiene 26 erzeugt.

### Bezugszeichenliste

- 1: Antriebskette
- 2: Innenkettenglieder
- 3: Außenkettenglieder
- 4: Innenlaschen
- 5: Gelenkhülse
- 6: Rollen
- 7: Außenlaschen
- 8: Ketten bolzen
- 9: Bolzenöffnungen
- 10: Kettengelenk
- 11: Hülsenöffnungen
- 12: Kopfbereich
- 13: stirnseitiger Kontaktabschnitt
- 14: rückseitiger Kontaktabschnitt
- 15: Stanzabschnitt
- 16: konkaver Übergangsbereich
- 17: bauchseitiger Kontaktabschnitt
- 18: Blechstreifen
- 19: Stanzreihe
- 20: Stanzausschnitte
- 21: Kettentrieb
- 22: Kurbelwellenkettenrad
- 23: Nockenwellenkettenrad
- 24: Führungsschiene
- 25: Motorblock
- 26: Spannschiene
- 27: Kettenspanner
- 28: Spannkolben

- L: Laschenlängsachse

## Patentansprüche

1. Verfahren zum Herstellen von Kettenlaschen für eine Gelenkkette mit einander abwechselnden Innenkettengliedern (2) und Außenkettengliedern (3), wobei jedes Außenkettenglied (3) mindestens zwei Kettenlaschen mit jeweils zwei stirnseitigen Kopfbereichen (12) und zwei in den Kopfbereichen (12) angeordnete Bolzenöffnungen (9) und zwei sich durch die Bolzenöffnungen (9) erstreckende, die Kettenlaschen miteinander verbindende Kettenbolzen (8) umfasst, jedes Innenkettenglied (2) mindestens eine Kettenlasche und zwei im Abstand zueinander angeordnete Bolzenöffnungen (9) umfasst und sich jeweils ein Kettenbolzen (8) eines Außenkettenglieds (3) sich zum Bilden eines Kettengelenks (10) durch eine Bolzenöffnung (9) eines angrenzenden Innenkettenglieds (2) erstreckt, die Kontur der Kettenlaschen weist mehrere Stanzabschnitte (15) und zwei stirnseitige Kontaktabschnitte (13) auf, die nach dem Ausstanzen der Stanzabschnitte (15) zunächst mit den stirnseitigen Kontaktabschnitten (13) angrenzender Kettenlaschen verbunden sind und in einem nachfolgenden Trennschnitt getrennt werden,
**gekennzeichnet durch** folgende Schritte:
Bereitstellen eines Blechstreifens (18),
Ausstanzen der Stanzabschnitte (15) der Kettenlaschen aus dem Blechstreifen (18), wobei neben den stirnseitigen Kontaktabschnitten (13) an den Kopfbereichen (12) der Kettenlaschen jeweils ein weiterer rückenseitiger Kontaktabschnitt (14) mit einem komplementären Kontaktabschnitt angrenzender Kettenlaschen verbunden ist, und
Trennen der stirnseitigen Kontaktabschnitte (13) und der rückenseitigen Kontaktabschnitte (14) der Kopfbereiche (12) der Kettenlaschen mittels eines im Wesentlichen abfalllosen Trennschnitts.

2. Verfahren nach Anspruch 1,
**dadurch gekennzeichnet, dass** nach dem Ausstanzen der Stanzabschnitte (15) an den Kopfbereichen (12) der Kettenlaschen jeweils ein weiterer bauchseitiger Kontaktabschnitt (17) mit einem komplementären Kontaktabschnitt angrenzender Kettenlaschen verbunden ist, die in dem nachfolgenden Trennschnitt voneinander getrennt werden.

3. Verfahren nach Anspruch 2,
**dadurch gekennzeichnet, dass** nach dem Ausstanzen der Stanzabschnitte (15) die rückenseitigen Kontaktabschnitte (14) mit den bauchseitigen Kontaktabschnitten (17) angrenzender Kettenlaschen verbunden sind.

4. Verfahren nach einem der Ansprüche 1 bis 3,
**dadurch gekennzeichnet, dass** das Ausstanzen der Stanzabschnitte (15) der Kettenlaschen durch Vorstanzen und anschließendem Nachschneiden der Stanzabschnitte (15) erfolgt.

5. Verfahren nach einem der Ansprüche 1 bis 4,
**dadurch gekennzeichnet, dass** die Stanzabschnitte (15) der Kettenlaschen angrenzend an die stirnseitigen, rückenseitigen und/oder bauchseitigen Kontaktabschnitte (13,14,17) einen zumindest konkaven Übergangsbereich (16) aufweisen.

6. Verfahren zum Herstellen von gewichts- und abfalloptimierten Außenlaschen (7) für eine Gelenkkette nach einem der Ansprüche 1 bis 5, wobei jedes Außenkettenglied (3) mindestens zwei Außenlaschen (7) und jedes Innenkettenglied (2) mindestens eine Innenlasche (4) umfasst, die Kontur der Außenlaschen (7) weist mehrere Stanzabschnitte (15) und zwei stirnseitige Kontaktabschnitte (13) auf, die nach dem Ausstanzen der Stanzabschnitte (15) zunächst mit den stirnseitigen Kontaktabschnitten (13) angrenzender Außenlaschen (7) verbunden sind und in einem nachfolgenden Trennschnitt getrennt werden,
**gekennzeichnet durch** folgende Schritte:
Bereitstellen eines Blechstreifens (18),
Ausstanzen der Stanzabschnitte (15) mehrerer Außenlaschen (7) aus dem Blechstreifen (18), wobei neben den stirnseitigen Kontaktabschnitten (13) an den Kopfbereichen (12) der Außenlaschen (7) jeweils ein weiterer rückenseitiger Kontaktabschnitt (14) mit einem komplementären Kontaktabschnitt angrenzender Außenlaschen (7) verbunden ist, und
Trennen der stirnseitigen Kontaktabschnitte (13) und der rückenseitiger Kontaktabschnitte (14) der Kopfbereiche (12) der Außenlaschen (7) mittels eines im Wesentlichen abfalllosen Trennschnitts.

7. Verfahren nach Anspruch 6,
**dadurch gekennzeichnet, dass** die stirnseitigen und/oder die rückenseitigen Kontaktabschnitte (13,14) der Kopfbereiche (12) der Außenlaschen (7) gegenüber der Kontur der mindestens einen Innenlasche (4) in Richtung der Bolzenöffnungen (9) zurückversetzt sind.

8. Verfahren nach Anspruch 6 oder 7,
**dadurch gekennzeichnet, dass** die Gelenkkette eine als Hülsen- oder Rollenkette ausgebildete Antriebskette (1) ist.

9. Hülsen- oder Rollenkette mit einander abwechselnden Innenkettengliedern (2) und Außenkettengliedern (3), die jeweils mittels eines Kettengelenks (10) miteinander verbunden sind, wobei jedes Außenkettenglied (3) mindestens zwei Außenlaschen (7) mit jeweils zwei stirnseitigen Kopfbereichen (12) und zwei in den Kopfbereichen (12) angeordnete Bolzenöffnungen (9) und zwei sich durch die Bolzenöffnungen (9) erstreckende die Außenlaschen (7) miteinander verbindende Kettenbolzen (8) umfasst, jedes Innenkettenglied (2) mindestens eine Innenlasche (4) und zwei im Abstand zueinander angeordnete Bolzenöffnungen (9) umfasst und sich jeweils ein Kettenbolzen (8) eines Außenkettenglieds (3) sich zum Bilden des Kettengelenks (10) durch eine Bolzenöffnung (9) eines angrenzenden Innenkettenglieds (2) erstreckt,
**dadurch gekennzeichnet, dass** die Kontur der Außenlaschen (7) mehrere mittels Ausstanzen hergestellte Stanzabschnitte (15) sowie an den zwei stirnseitigen Kopfbereichen (12) jeweils mindestens einen stirnseitigen und einen rückenseitigen Kontaktabschnitt (13,14) aufweist, die mittels eines dem Ausstanzen der Stanzabschnitte (15) nachfolgenden Trennschnitt hergestellt sind, wobei die stirnseitigen und/oder rückenseitigen Kontaktabschnitte (13,14) gegenüber der Kontur der Innenlaschen (4) in Richtung der Bolzenöffnungen (9) zurückversetzt sind.

10. Hülsen- oder Rollenkette nach Anspruch 9,
**dadurch gekennzeichnet, dass** die Kontur der Außenlaschen (7) an den zwei stirnseitigen Kopfbereichen (12) weiter jeweils mindestens einen bauchseitigen Kontaktabschnitt (17) aufweist, die mittels eines dem Ausstanzen der Stanzabschnitte (15) nachfolgenden Trennschnitt hergestellt und gegenüber der Kontur der Innenlaschen (4) in Richtung der Bolzenöffnungen (9) zurückversetzt sind.

11. Hülsen- oder Rollenkette nach Anspruch 9 oder 10,
**dadurch gekennzeichnet, dass** die Kontur der Außenlaschen (7) zwischen den zwei stirnseitigen Kopfbereichen (12) tailliert ausgebildet und gegenüber der Kontur der Innenlaschen (4) zurückversetzt ist.

12. Kettentrieb (21) für einen Verbrennungsmotor, insbesondere ein Steuerkettentrieb, mit einem antreibenden Kettenrad (22), mindestens einem abtreibenden Kettenrad (23) und einer Hülsen- oder Rollenkette nach einem der Ansprüche 9 bis 11.

## Claims

1. Method for producing chain link plates for a plate link chain with alternating inner chain links (2) and outer chain links (3), where each outer chain link (3) comprises at least two chain link plates each having two face side head portions (12) and two pin openings (9) disposed in said head portions (12) and two chain pins (8) extending through said pin openings (9) and connecting said chain link plates to one another, each inner chain link (2) comprising at least one chain link plate and two mutually spaced pin openings (9) and one respective chain pin (8) of an outer chain link (3) extends through a pin opening (9) of an adjoining inner chain link (2) to form a chain joint (10), the contour of said chain link plates comprising several punch sections (15) and two face side contact sections (13) which, once said punch sections (15) are punched out, are initially connected to said face side contact sections (13) of adjoining chain link plates and separated in a subsequent separation cut,
**characterized by** the steps of:
providing a sheet metal strip (18),
punching out said punch sections (15) of said chain link plates from said sheet metal strip (18), where a further rear side contact section (14), in addition to said face side contact sections (13), is respectively connected at said head portions (12) of said chain link plates to a complementary contact section of adjoining chain link plates, and
separating said face side contact sections (13) and said rear side contact sections (14) of said head portions (12) of said chain link plates by way of a substantially waste-free separation cut.

2. Method according to claim 1,
**characterized in that**, after punching out said punch sections (15) at said head portions (12) of said chain link plates, a respective further front side contact section (17) is connected to a complementary contact section of adjoining chain link plates which are separated from one another in said subsequent separation cut.

3. Method according to claim 2,
**characterized in that**, after punching out said punch sections (15), said rear side contact sections (14) are connected to said front side contact sections (17) of adjoining chain link plates.

4. Method according to one of the claims 1 to 3,
**characterized in that** punching out said punch sections (15) of said chain link plates is done by pre-punching and subsequently profiling said punch sections (15).

5. Method according to one of the claims 1 to 4,
**characterized in that** said punch sections (15) of said chain link plates have an at least concave transition region (16) adjoining said face side, said rear side and/or said front side contact sections (13,14,17).

6. Method for producing weight and waste-optimized outer plates (7) for a plate link chain according to one of claims 1 to 5, where each outer chain link (3) comprises at least two outer plates (7) and each inner chain link (2) at least one inner plate (4), the contour of said outer plates (7) comprising several punched sections (15) and two face side contact sections (13) which, once said punch sections (15) are punched out, are initially connected to said face side contact sections (13) of adjoining outer plates (7) and separated in a subsequent separation cut,
**characterized by** the steps of:
providing a sheet metal strip (18),
punching out said punch sections (15) of several outer link plates (7) from said sheet metal strip (18), where a further rear side contact section (14), in addition to said face side contact sections (13), is respectively connected at said head portions (12) of said outer plates (7) to a complementary contact section of adjoining outer plates (7), and
separating said face side contact sections (13) and said rear side contact sections (14) of said head portions (12) of said outer plates (7) by way of a substantially waste-free separation cut.

7. Method according to claim 6,
**characterized in that** said face-side and/or said rear side contact sections (13,14) of said head portions (12) of said outer plates (7) are set back relative to the contour of said at least one inner plate (4) in the direction of said pin openings (9).

8. Method according to claim 6 or 7,
**characterized in that** said plate link chain is a drive chain (1) configured as a bush or roller chain.

9. Bush or roller chain with alternating inner chain links (2) and outer chain links (3) which are each connected to one another by way of a chain joint (10), where each outer chain link (3) comprises at least two outer plates (7) each with two face side head portions (12) and two pin openings (9) disposed in said head portions (12), and two chain pins (8) extending through said pin openings (9) and connecting said outer plates (7), each inner chain link (2) comprising at least one inner plate (4) and two pin openings (9) spaced from each other, and where each chain pin (8) of an outer chain link (3) extends through a pin opening (9) of an adjoining inner chain link (2) for forming said chain joint (10),
**characterized in that** the contour of said outer plates (7) comprises several punch sections (15) produced by way of punching, and at least one face side and one rear side contact section (13,14) at each of said two head portions (12) which are produced by way of a separation cut subsequent to said punch sections (15) being punched out, where said face side and/or rear side contact sections (13,14) are set back relative to the contour of said inner plates (4) in the direction of said pin openings (9).

10. Bush or roller chain according to claim 9,
**characterized in that** the contour of said outer plates (7) at said two face side head portions (12) each further comprise at least one front side contact section (17) which is produced by way of a separation cut subsequent to said punch sections (15) being punched out and are set back relative to the contour of said inner plates (4) in the direction of said pin openings (9).

11. or roller chain according to claim 9 or 10,
**characterized in that** the contour of said outer plates (7) between said two face side head portions (12) is formed to be waisted and set back relative to the contour of said inner plates (4).

12. Chain drive (21) for an internal combustion engine, in particular a timing chain drive, comprising a drive sprocket (22), at least one driven sprocket (23) and a bush or roller chain according to one of claims 9 to 11.

## Revendications

1. Procédé de fabrication de plaques de liaison pour une chaîne articulée comprenant des maillons de chaîne intérieurs (2) et des maillons de chaîne extérieurs (3) alternés, dans lequel chaque maillon de chaîne extérieur (3) comprend au moins deux plaques de liaison avec respectivement deux régions formant tête (12) frontales et deux orifices pour axe (9) agencés dans les régions formant tête (12) et deux axes de chaîne (8) s'étendant à travers les orifices pour axe (9) et reliant ensemble les plaques de liaison, chaque maillon de chaîne intérieur (2) comprend au moins une plaque de liaison et deux orifices pour axe (9) agencés à distance l'un de l'autre, et respectivement un axe de chaîne (8) d'un maillon de chaîne extérieur (3) s'étend à travers un orifice pour axe (9) d'un maillon de chaîne intérieur (2) adjacent afin de former une articulation de chaîne (10), le contour des plaques de liaison présente plusieurs sections d'estampage (15) et deux sections de contact (13) frontales qui, après la découpe des sections d'estampage (15), sont d'abord reliées aux sections de contact (13) frontales de plaques de liaison adjacentes et sont séparées lors d'une coupe subséquente,
**caractérisé par** les étapes ci-dessous consistant à :
fournir une bande de tôle (18),
découper les sections d'estampage (15) des plaques de liaison dans la bande de tôle (18), dans lequel, en plus des sections de contact (13) frontales au niveau des régions formant tête (12) des plaques de liaison, respectivement une autre section de contact (14) dorsale est reliée à une section de contact complémentaire de plaques de liaison adjacentes, et
séparer les sections de contact (13) frontales et les sections de contact (14) dorsales des régions formant tête (12) des plaques de liaison au moyen d'une coupe de séparation essentiellement sans déchets.

2. Procédé selon la revendication 1,
**caractérisé en ce que,** après la découpe des sections d'estampage (15) au niveau des régions formant tête (12) des plaques de liaison, respectivement une autre section de contact (17) dorsale est reliée à une section de contact complémentaire de plaques de liaison adjacentes séparées l'une de l'autre lors de la coupe de séparation subséquente.

3. Procédé selon la revendication 2,
**caractérisé en ce que,** après la découpe des sections d'estampage (15), les sections de contact (14) dorsales sont reliées aux sections de contact (17) dorsales de plaques de liaison adjacentes.

4. Procédé selon l'une quelconque des revendications 1 à 3,
**caractérisé en ce que** la découpe des sections d'estampage (15) des plaques de liaison intervient par pré-estampage et découpe ultérieure des sections d'estampage (15).

5. Procédé selon l'une quelconque des revendications 1 à 4,
**caractérisé en ce que** les sections d'estampage (15) des plaques de liaison présentent une région de transition (16) au moins concave adjacente aux sections de contact (13, 14, 17) frontales, dorsales et/ou ventrales.

6. Procédé de fabrication de plaques extérieures (7) optimisées en termes de poids et de déchets pour une chaîne articulée selon l'une quelconque des revendications 1 à 5, dans lequel chaque maillon de chaîne extérieur (3) comprend au moins deux plaques extérieures (7) et chaque maillon de chaîne intérieur (2) comprend au moins une plaque intérieure (4), le contour des plaques extérieures (7) présente plusieurs sections d'estampage (15) et deux sections de contact (13) frontales qui, après la découpe des sections d'estampage (15), sont d'abord reliées aux sections de contact (13) frontales de plaques extérieures (7) adjacentes et sont séparées lors d'une coupe de séparation subséquente,
**caractérisé par** les étapes ci-dessous consistant à :
fournir une bande de tôle (18),
découper les sections d'estampage (15) de plusieurs plaques extérieures (7) dans la bande de tôle (18), dans lequel, en plus des sections de contact (13) frontales au niveau des régions formant tête (12) des plaques extérieures (7), respectivement une autre section de contact (14) dorsale est reliée à une section de contact complémentaire de plaques extérieures (7) adjacentes, et
séparer les sections de contact (13) frontales et les sections de contact (14) dorsales des régions formant tête (12) des plaques extérieures (7) au moyen d'une coupe de séparation essentiellement sans déchets.

7. Procédé selon la revendication 6,
**caractérisé en ce que** les sections de contact (13, 14) frontales et/ou dorsales des régions formant tête (12) des plaques extérieures (7) sont en retrait par rapport au contour de la au moins une plaque intérieure (4) en direction des orifices pour axe (9).

8. Procédé selon la revendication 6 ou 7,
**caractérisé en ce que** la chaîne articulée est une chaîne d'entraînement (1) réalisée sous la forme d'une chaîne à douilles ou à rouleaux.

9. Chaîne à douilles ou à rouleaux avec des maillons de chaîne intérieurs (2) et des maillons de chaîne extérieurs (3) alternés, qui sont reliés ensemble respectivement au moyen d'une articulation de chaîne (10), dans laquelle chaque maillon de chaîne extérieur (3) comprend au moins deux plaques extérieures (7) avec respectivement deux régions formant tête (12) frontales et deux orifices pour axe (9) agencés dans les régions formant tête (12) et deux axes de chaîne (8) s'étendant à travers les orifices pour axe (9) et reliant ensemble les plaques extérieures (7), chaque maillon de chaîne intérieur (2) comprend au moins une plaque intérieure (4) et deux orifices pour axe (9) agencés à distance l'un de l'autre, et respectivement un axe de chaîne (8) d'un maillon de chaîne extérieur (3) s'étend à travers un orifice pour axe (9) d'un maillon de chaîne intérieur (2) adjacent afin de former l'articulation de chaîne (10),
**caractérisée en ce que** le contour des plaques extérieures (7) présente plusieurs sections d'estampage (15) produites par découpe, et, au niveau des deux régions formant tête (12) frontales, respectivement au moins une section de contact frontale et une section de contact dorsale (13, 14) qui sont produites au moyen d'une coupe de séparation succédant à la découpe des sections d'estampage (15), dans lequel les sections de contact (13, 14) frontale(s) et/ou dorsale(s) sont en retrait par rapport au contour des plaques intérieures (4) en direction des orifices pour axe (9).

10. Chaîne à douilles ou à rouleaux selon la revendication 9,
**caractérisée en ce que** le contour des plaques extérieures (7) au niveau des deux régions formant tête (12) frontales présente en outre respectivement au moins une section de contact (17) dorsale qui est produite au moyen d'une coupe de séparation succédant à la découpe des sections d'estampage (15) et qui est en retrait par rapport au contour des plaques intérieures (4) en direction des orifices pour axe (9).

11. Chaîne à douilles ou à rouleaux selon la revendication 9 ou 10,
**caractérisé en ce que** le contour des plaques extérieures (7) entre les deux régions formant tête (12) frontales est galbé et en retrait par rapport au contour des plaques intérieures (4).

12. Entraînement par chaîne (21) pour un moteur à combustion interne, en particulier un entrainement de chaîne de distribution, comprenant une roue dentée d'entrée (22), au moins une roue dentée de sortie (23) et une chaîne à douilles ou à rouleaux selon l'une quelconque des revendications 9 à 11.
